# EUROPÄISCHE PATENTANMELDUNG

(11) **EP 1 367 807 A1**
(43) Veröffentlichungstag der Anmeldung: **03.12.2003**
(21) Anmeldenummer: 03101419.4
(22) Anmeldetag: 20.05.2003
(51) Int. Cl.: H04M 7/00, H04Q 3/66

(54) **Verfahren zur standortbasierten Leitweglenkung von Kommunikationsverbindungen**

(30) Priorität: 29.05.2002 DE 10223980
(71) Anmelder: SIEMENS AKTIENGESELLSCHAFT, 80333 München (DE)
(72) Erfinder: Horvath, Ernst, 1060, Wien (AT); Winter, Johannes, 1090, Wien (AT); Wille, Klaus, 81679, München (DE)

(57) **Zusammenfassung**

Die Erfindung betrifft ein Verfahren zur Leitweglenkung von Kommunikationsverbindungen in einem Kommunikationssystem (CSY) mit einem einer ersten Kommunikationseinrichtung (PBX1) zugeordneten Kommunikationsendgerät (T1), das an einer zweiten Kommunikationseinrichtung (PBX2) registrierbar ist und mit einem paketorientierten Netzwerk (LAN), über welches das Kommunikationsendgerät (T1) mit der ersten und der zweiten Kommunikationseinrichtung (PBX1,PBX2) verbunden ist. In Folge einer durch einen Teilnehmer erfolgenden Registrierung wird das Kommunikationsendgerät (T1) von der ersten Kommunikationseinrichtung (PBX1) abgemeldet und der zweiten Kommunikationseinrichtung (PBX2) zugeordnet. Bei einer am Kommunikationsendgerät (T1) initialisierten Kommunikationsverbindung wird eine Überprüfung vorgenommen, ob die eingeleitete Kommunikationsverbindung zu einem durch eine im Kommunikationssystem (CSY) vorbehaltene Teilnehmernummer definierten Zieleinrichtung erfolgen soll. Bei einem positiven Überprüfungsergebnis erfolgt eine Bestimmung der Zieleinrichtung (EMG1) unter Berücksichtigung von im Kommunikationsendgerät (T1) verfügbaren, den Standort des Kommunikationsendgeräts (T1) charakterisierenden Informationen (I), worauf die Kommunikationsverbindung zu einer der ersten Kommunikationseinrichtung (PBX1) zugeordneten Zieleinrichtung (EMG1) aufgebaut wird.

## Beschreibung

Die Erfindung betrifft ein Verfahren zur Leitweglenkung von Kommunikationsverbindungen in paketorientierten Netzwerken unter Steuerung von Kommunikationseinrichtungen.

In modernen Kommunikationssystemen wird verstärkt dazu übergegangen, kontinuierliche Datenströme, z.B. zur Sprach- oder Videokommunikation sowie Daten zur Steuerung und Kontrolle von Kommunikationsverbindungen über paketorientierte Netzwerke zu übermitteln. Zu den paketorientierten Netzwerken zählen bekanntermaßen LANS (Local Area Network), MANs (Metropolitan Area Network), WANs (Wide Area Network) oder auch das so genannte Internet, das einen weltweiten Zugriff auf paketorientiert übertragene Daten ermöglicht. Auf dieser Technik basiert beispielsweise die so genannte Internettelephonie, die häufig auch als "Voice over Internet Protocol" (VoIP) bezeichnet wird.

Im Bereich der Telekommunikation sind zunehmend Kommunikationseinrichtungen bekannt, die neben gebräuchlichen - auf einem leitungsvermittelnden Prinzip basierenden - Kommunikationsverbindungen auch eine Unterstützung des VoIP-Verfahrens und eine Anbindung von VOIP-Kommunikationsendgeräten ermöglichen.

Im Unterschied zu dezentralen Kommunikationssystemen auf Basis so genannter Peer-to-Peer-Konfigurationen, bei denen sowohl die Kommunikationssteuerung als auch die Vermittlungssteuerung zwischen den Kommunikationsendgeräten ohne eine zentrale Kommunikationseinrichtung erfolgt, übernehmen die oben genannten, um eine VoIP-Funktionalität erweiterten Kommunikationseinrichtungen auch bei VOIP-Kommunikationsendgeräten eine zentrale Steuerungsfunktion bezüglich der Vermittlung von Kommunikationsverbindungen.

Zu diesem Zweck ist jedes VOIP-Kommunikationsendgerät an seiner zugeordneten Kommunikationseinrichtung mit zugehörigen Teilnehmerdaten wie z.B. der Teilnehmernummer, Berechtigungen des Teilnehmers usw. registriert. Jedes VoIP-Kommunikationsendgerät ist also über das paketorientierte Netzwerk einer ihm zugehörigen, gleichfalls an das paketorientierte Netzwerk angebundene Kommunikationseinrichtung zugeordnet. Das paketorientierte Netzwerk umspannt im allgemeinen das gesamte Kommunikationssystem, d.h. an jedem Punkt des Kommunikationssystems ist ein Zugang zum paketorientierten Netzwerk möglich. An jedem möglichen Zugang ist wiederum jeder mögliche Kommunikationspartner erreichbar.

In Kommunikationssystemen ist die Vergabe von netzeinheitlich vorbehaltenen Teilnehmernummern gemäß eines so genannten Nummernplans üblich. Zu diesen vorbehaltenen Teilnehmernummern zählen beispielsweise Notrufnummern, die beispielsweise in Deutschland auf die Teilnehmernummer "112", in den Vereinigten Staaten auf die Teilnehmernummer "911" standardisiert sind. Wählt ein Teilnehmer eine derartige Notrufnummer, so muss er erwarten können, dass er mit einer Zentralstelle - Rettungsleitstelle - verbunden wird, die sich in unmittelbarer Nähe zu ihm befindet und lokale Rettungsmaßnahmen veranlassen kann. Um eine exakte Lokalisierung des Notrufortes durch Rettungsdienste zu erleichtern wird häufig auch das Konzept einer lokalen Identifizierungsnummer, LIN (Location Identification Number) angewandt. Diese für jedes Kommunikationsendgerät individuelle LIN wird bei einem Notruf an die Rettungsleitstelle übermittelt und gestattet dieser, den Ort des Notrufs auch in Fällen zu bestimmen, in denen der rufende Teilnehmer nicht in der Lage ist, den Notrufort zu bestimmen oder sprachlich auszudrücken.

Moderne Kommunikationssysteme bieten häufig die Funktionalität eines "mobilen Teilnehmers". Hierunter ist zu verstehen, dass ein Teilnehmer ein weitgehend beliebiges Kommunikationsendgerät innerhalb des Kommunikationssystems als das seinige individualisieren kann. Um diese Individualisierung vorzunehmen, muss der mobile Teilnehmer sich an einem Kommunikationsendgerät seiner Wahl durch Eingabe einer ihm zugeordneten Benutzernummer - beispielsweise seiner Teilnehmernummer - und einer persönlichen Identifikationsnummer registrieren. Statt dieser Eingabe ist auch eine Registrierung mittels einer Chipkarte gebräuchlich.

Die Registrierung eines mobilen Teilnehmers an einem Kommunikationsendgerät seiner Wahl ist auch in einem aus einem Verbund mehrerer Kommunikationseinrichtungen bestehenden Kommunikationssystem möglich. In einem derartigen Verbund ist einem jeweiligen Teilnehmer häufig eine Kommunikationseinrichtung als so genannte Heimatstation zugeordnet. An der Heimatstation sind die Teilnehmerdaten des jeweiligen Teilnehmers gespeichert.

Bei einem Wechsel des Teilnehmers auf ein einer zweiten Kommunikationseinrichtung zugeordnetes - "besuchtes" - Kommunikationsendgerät erfolgt eine Übermittlung der dem Teilnehmer zugeordneten Teilnehmerdaten von der Heimatstation an die zweite Kommunikationseinrichtung sowie eine Speicherung dieser Teilnehmerdaten in der zweiten Kommunikationseinrichtung oder gegebenenfalls im besuchten Kommunikationsendgerät. Kommunikationsseinrichtungen, denen Kommunikationsendgeräte über eine fest zugeteilte Leitung und eine dem jeweiligen Kommunikationsendgerät fest zugeteilte Anschlusseinheit zugeordnet sind, übernehmen nach dem Erhalt der Teilnehmerdaten die Vermittlungs- und Kommunikationssteuerung ohne Mitwirkung der Heimatstation des mobilen Teilnehmers. Anschaulich hat der mobile Teilnehmer mit einer Registrierung an einem einer anderen Kommunikationseinrichtung zugeordneten Kommunikationsendgerät die Kommunikationseinrichtung "gewechselt", wenngleich natürlich bezüglich seiner Teilnehmernummer oder bezüglich seiner Anruferidentifizierung bei ausgehenden Verbindungen keine Änderung eingetreten ist.

Für Kommunikationssysteme, bei denen die Kommunikationsendgeräte - VOIP-Kommunikationsendgeräte- mit den Kommunikationseinrichtungen über ein paketorientiertes Netzwerk verbunden sind, ist der oben genannte Wechsel der die Steuerungs- und Vermittlungsfunktionen ausführenden Kommunikationseinheit nicht notwendig, da über das das gesamte Kommunikationssystem umfassende paketorientierte Netzwerk die Heimatstation auch vom besuchten Kommunikationsendgerät aus erreichbar ist. Statt dessen wird das besuchte VOIP-Kommunikationsendgerät - nach einem Anmeldevorgang an der anfänglich zugeordneten zweiten Kommunikationseinrichtung - der Heimatstation des mobilen Teilnehmers zugeordnet.

Bei einer Anbindung von Kommunikationsendgeräten über ein paketorientiertes Netzwerk an einen Verbund von Kommunikationseinrichtungen ergibt sich bei mobilen Teilnehmern das Problem, dass aufgrund einer oftmals überregionalen Erstreckung des Kommunikationssystems ein Aufbau einer Kommunikationsverbindung zu netzeinheitlich vorbehaltenen Rufnummern an eine dieser vorbehaltenen Rufnummer zugeordneten Zentralstelle durchgestellt wird, die unter Umständen weit entfernt vom rufenden Kommunikationsendgerät lokalisiert ist. Dieser Fall tritt z.B. bei großräumig ausgelegten Kommunikationssystemen ein, wenn sich ein einer Heimatstation in einer Stadt A zugeordneter mobiler Teilnehmer in einer Stadt B an einem - besuchten - VOIP-Kommunikationsendgerät registriert.

Für den Fall, dass ein mobiler Teilnehmer sich an einem Kommunikationsendgerät registriert hat, das sich in einer anderen Stadt B - oder bei länderübergreifenden Kommunikationssystemen sogar in einem anderen Land - als der seines ihm zugehörigen Endgeräts - bzw. seiner Heimatstation - befindet, tritt bei einem aus einem Verbund von Kommunikationseinrichtungen bestehenden Kommunikationssystem der Fall ein, dass bei einer Notrufwahl des mobilen Teilnehmers die Kommunikationsverbindung über das paketorientierte Netzwerk an seine - in der Stadt A befindliche - Heimatstation geleitet wird, die Kommunikationsverbindung somit an eine vom Ort des Notrufs völlig entfernte, der Heimatstation in der Stadt A zugeordnete Rettungsleitstelle durchgestellt wird.

Aufgabe der Erfindung ist es, Maßnahmen vorzusehen, die einem mobilen Teilnehmer in einem mit einem paketorientierten Netzwerk zur Anbindung der Kommunikationsendgeräte an einen Verbund von Kommunikationseinrichtungen ausgestalteten Kommunikationssystem bei der Wahl vorbehaltener Teilnehmernummern eine Durchstellung an lokale Zentralstellen ermöglicht.

Eine Lösung der Aufgabe erfolgt durch ein Verfahren mit den Merkmalen des Patentanspruchs 1.

Erfindungsgemäß liegen an einem besuchten Kommunikationsendgerät den Standort des Kommunikationsendgeräts charakterisierende Informationen vor.

Bei dem erfindungsgemäßen Verfahren wird zunächst geprüft, ob eine Einleitung einer Kommunikationsverbindung zu einem vorbehaltenen Ziel - insbesondere einer Rettungsleitstelle - durch einen - mobilen - Teilnehmer, der sich an diesem Kommunikationsendgerät registriert hat, angefordert wird. Diese Überprüfung erfolgt entweder im Kommunikationsendgerät oder auch in einer dem Kommunikationsendgerät zugeordneten Kommunikationseinrichtung. Diese dem Kommunikationsendgerät zugeordnete Kommunikationseinrichtung ist beispielsweise die Kommunikationseinrichtung, durch die das Kommunikationsendgerät administriert wird. Eine Administrierung erfolgt beispielsweise in Form von Softwareupdates oder Wartungsmaßnahmen.

Im Falle einer angeforderten Kommunikationsverbindung zu einem vorbehaltenen Ziel werden die den Standort des Kommunikationsendgeräts charakterisierende Informationen zur Bestimmung des vorbehaltenen Ziels berücksichtigt. Eine Berücksichtigung erfolgt z.B. in der Weise, das die Information zusätzlich zur Wahlinformation vom Kommunikationsendgerät zur Kom munikationseinrichtung gesandt werden. Die Kommunikationseinrichtung bestimmt dann, ob die übersandten Informationen mit den an der Kommunikationseinrichtung vorhandenen Daten zum Standort der Kommunikationseinrichtung übereinstimmen. Liegt eine Übereinstimmung nicht vor, wird das vorbehaltene Ziel unter Berücksichtigung der den Standort des Kommunikationsendgeräts charakterisierenden Informationen bestimmt.

Ein wesentlicher Vorteil des erfindungsgemäßen Verfahrens liegt in der Realisierung eines wesentlichen sicherheitstechnischen Aspekts, der eine Verbindung zur nächstliegenden Rettungsleitstelle oder ähnlichen lokalen Zentraleinrichtungen ermöglicht.

Ein weiterer Vorteil des erfindungsgemäßen Verfahrens ist darin zu sehen, dass keine aufwändigen Software- und/oder Hardwareänderungen am jeweiligen Kommunikationsendgerät oder an den Kommunikationseinrichtungen vorgenommen werden müssen.

Vorteilhafte Weiterbildungen der Erfindung sind in den Unteransprüchen angegeben.

In vorteilhafter Weise liegen die Informationen einer kommunikationssystemweit eindeutigen Teilnehmernummer am Kommunikationsendgerät des mobilen Teilnehmers vor. Unter einer netzweiteindeutigen Teilnehmernummer ist in diesem Zusammenhang zu verstehen, dass die Teilnehmernummer des vorbehaltenen Ziels z.B. mit einem vollständigen "Präfix" abgespeichert sind, also insbesondere in Form einer internationalen und nationalen Vorwahlnummer. Die netzweiteindeutige Teilnehmernummer hat z.B. die Form "+49 89 230 110". Darin ist "+49" die internationale Vorwahlnummer für Deutschland, "89" die Vorwahlnummer der Stadt - im Beispiel die der Stadt München -, "230" steht beispielhaft für die Anwahlnummer der zentralen Kommunikationseinrichtung oder eines Nummernbereichs des Kommunikationssystems, und "110" steht für die in diesem Nummernbereich gültige Notrufnummer.

Ein Ausführungsbeispiel der Erfindung wird im folgenden anhand der Zeichnung näher erläutert.

Dabei zeigen:
- Fig. 1:: ein Strukturbild zur schematischen Darstellung eines Kommunikationssystems;
- Fig. 2:: ein Ablaufdiagramm zur Veranschaulichung der bei dem erfindungsgemäßen Verfahren ablaufenden, wesentlichen Verfahrensschritte.

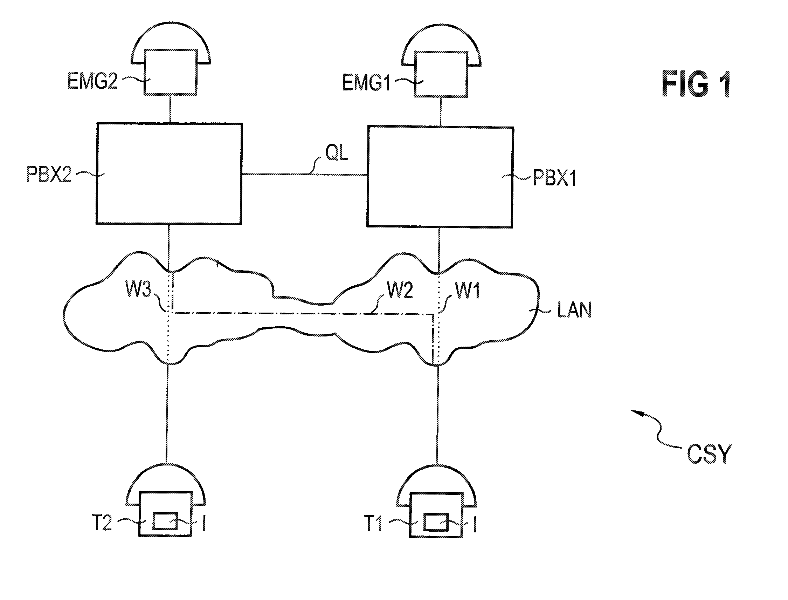

In Fig. 1 ist ein Kommunikationssystem CSY mit einem im gesamten Kommunikationssystem CSY zugreifbaren paketorientierten Netzwerk LAN dargestellt.

An das paketorientierte Netzwerk LAN sind zwei Kommunikationseinrichtungen PBX1, PBX2 sowie zwei Kommunikationsendgeräte T1,T2 angeschlossen. Entsprechend dieser Anschlussweise unterstützen die beiden Kommunikationsendgeräte T1,T2 einen paketorientierten Austausch von Nutz- und/oder Signalisierungsdaten, sind also beispielsweise als VoIP-Kommunikationsendgeräte T1,T2 (Voice over Internet Protocol) ausgestaltet.

Signalisierungsdaten enthalten dabei z.B. zur Verbindungssteuerung, Signalisierung usw. notwendige Informationen, wohingegen Nutzdaten Sprach- und/oder Videokommunikationsdaten enthalten.

Die beiden Kommunikationseinrichtungen PBX1,PBX2 sind über eine Querleitung QL zum Austausch von Daten miteinander verbunden. Die Querleitung QL kann entweder als "virtuelle" Verbindung über das paketorientierte Netzwerk LAN ausgestaltet sein, oder auch - wie in der Zeichnung dargestellt - in Form einer festverbindenden Leitung vorliegen.

Mit der ersten Kommunikationseinrichtung PBX1 ist weiterhin ein einem Ziel mit einer im Kommunikationssystem (CSY) vorbe haltenen Teilnehmernummer zugeordnetes erstes Kommunikationsendgerät EMG1, mit der zweiten Kommunikationseinrichtung PBX2 ein einem Ziel mit einer im Kommunikationssystem (CSY) vorbehaltenen Teilnehmernummer zugeordnetes zweites Kommunikationsendgerät EMG2 verbunden.

Aus Gründen der Ausfallsicherheit sind beide einem vorbehaltenen Ziel zugeordneten Kommunikationsendgeräte EMG1,EMG2 nicht über das paketorientierte Netzwerk LAN an die jeweiligen Kommunikationseinrichtungen PBX1,PBX2 angeschlossen. Bei einer entsprechenden Datenübertragungszuverlässigkeit ist jedoch auch eine Ausgestaltung dieser beiden Kommunikationsendgeräte EMG1,EMG2 als VOIP-Kommunikationsendgeräte und mithin eine Anbindung an das paketorientierte Netzwerk LAN vornehmbar.

In den VOIP-Kommunikationsendgeräten T1,T2 ist eine den Standort des jeweiligen Kommunikationsendgeräts T1,T2 charakterisierende Information I gespeichert.

Diese Information I ist beispielsweise als kommunikationssystemeindeutige Teilnehmernummer mit einem vollständigen Präfix abgespeichert, wobei der Präfix aus einer internationalen und nationalen Vorwahlnummer besteht, z.B. in der Form "+49 89 230 110". Darin ist "+49" die internationale Vorwahlnummer, "89" die Vorwahlnummer der Stadt - im Beispiel die der Stadt München -, "230" steht beispielhaft für die Anwahlnummer der zentralen Kommunikationseinrichtung oder eines Nummernbereichs des Kommunikationssystems und "110" steht für die in diesem Nummernbereich gültige Notrufnummer.

In einer alternativen Ausführungsform liegt die den Standort des jeweiligen Kommunikationsendgeräts T1,T2 charakterisierende Information I in Form von geographischen Koordinaten vor. Dazu ist diese Information I zum Zeitpunkt der Einrichtung und/oder Administration der Kommunikationsendgeräte T1,T2 durch die jeweilige zugeordnete Kommunikationseinrich tung PBX1,PBX2 an die Telekommunikationsendgeräte T1,T2 übermittelt worden. Alternativ wird diese Information I dynamisch erzeugt, z.B. durch eine - nicht dargestellte - Einheit zum Empfang und zur Auswertung von Satellitensignalen - GPS-Signalen (Global Positioning System) - für eine Positionsbestimmung in Form geographischer Koordinaten.

Die den Standort des jeweiligen Kommunikationsendgeräts T1,T2 charakterisierende Information I liegt alternativ in Form einer im paketorientierten Netzwerk LAN eindeutigen Knotennummer oder in Form einer Identifikationsnummer des jeweiligen Kommunikationsendgeräts T1,T2 vor. Mit Hilfe der letztgenannten Identifikationsnummer ist unter Heranziehung - nicht dargestellter - Zuordnungstabellen in einer beteiligen Kommunikationseinrichtung eine Zuordnung zum Standort des jeweiligen Kommunikationsendgeräts durchführbar. Eine derartige Identifikationsnummer ist beispielsweise die so genannte Line Identification Number, LIN, die in einigen Ländern gesetzlich vorgeschrieben ist. Eine weitere Möglichkeit zur Definition der Identifikationsnummer ist die Verwendung einer über das gesamte paketorientierte Netzwerk eindeutigen IP-Adresse (Internet Protocol).

Die Zeichnung stellt im übrigen nur einen Ausschnitt aus einem komplexen Kommunikationssystem CSY dar, das in realen technischen Verwirklichungen weitere Funktionseinheiten - wie z.B. dem Fachmann als "Gatekeeper" bekannte Systeme zur Verwaltung des paketorientierten Datenverkehrs sowie weitere Formen von Leitrechnern, Netzknoteneinrichtungen usw. - sowie eine größere Anzahl an Kommunikationseinrichtungen und Kommunikationsendgeräten enthält.

Die Kommunikationsendgeräte T1,T2 können auch in Form mobiler Kommunikationssysteme wie z.B. mobiler Kommunikationsendgeräke, PDAs (Personal Digital Assistant) usw. ausgestaltet sein. Insbesondere ist auch eine Ausgestaltung in Form datentechni scher Rechnereinheiten wie beispielsweise Personal Computer (PC) für den Fachmann nahe liegend.

In einem paketorientierten Netzwerk LAN existieren keine festen Leitwege. Die in der Zeichnung strichpunktiert sowie durchgezogen dargestellten Linien von Leitwegen W1,W2,W3 sind demgemäß als bildliche Darstellung möglicher Leitwege in dem - ansonsten verbindungslosen - paketorientierten Netzwerk LAN zu verstehen und dienen einer Veranschaulichung paketorientierter Datenströme.

Im folgenden wird davon ausgegangen, dass einem - im folgenden auch "mobiler" Teilnehmer genannten - Teilnehmer das zweite Kommunikationsendgerät T2 fest zugeordnet sei. Durch eine Signalisierungs- und Nutzdatenverbindung W3 über das paketorientierte Netzwerk LAN ist das zweite Kommunikationsendgerät T2 der zweiten Kommunikationseinrichtung PBX2 zugeordnet, die dessen Teilnehmerdaten gespeichert hat und daher im folgenden als die "Heimatstation" des dem zweiten Kommunikationsendgerät T2 zugeordneten Teilnehmer bezeichnet wird.

Das erste Kommunikationsendgerät T1 ist der ersten Kommunikationseinrichtung PBX1 über die Signalisierungs- und Nutzdatenverbindung W1 zugeordnet. Dieses erste Kommunikationsendgerät T1 ist beispielsweise ein sogenanntes "Shared Desk Telephone", also ein Kommunikationsendgerät T1, das einem Teilnehmer durch Registrierung eine vorübergehende Benutzung mit einer Individualisierung auf seine Einstellungen erlaubt.

Zur weiteren Veranschaulichung wird angenommen, dass sich die erste Kommunikationseinrichtung PBX1 und deren zugeordnetes erstes Kommunikationsendgerät T1 in der Stadt München befinden. Der Standort der zweiten Kommunikationseinrichtung PBX2 und deren zugeordnetes zweites Kommunikationsendgerät T2 sei die Stadt Wien.

Der mobile Teilnehmer, dessen Arbeitsplatztelephon seiner Firma, das zweite Kommunikationsendgerät T2, in Wien lokalisiert ist, befinde sich dienstlich in München und registriert sich zu diesem Zweck an einem Kommunikationsendgerät einer "Shared Desk Area", dem ersten Kommunikationsendgerät T1, unter Eingabe seiner persönlichen Identifikationsnummer und seiner an der zweiten Kommunikationseinrichtung T2 gültigen Teilnehmernummer.

Im Zuge der erfolgenden Registrierung kommuniziert die dem ersten Kommunikationsendgerät T1 zugeordnete erste Kommunikationseinrichtung PBX1 mit der Heimatstation PBX2 des mobilen Teilnehmers. Mit der Registrierung am ersten Kommunikationsendgerät T1 erhält die Heimatstation PBX2 eine Teilnehmernummer und/oder Knotennummer der dieses Kommunikationsendgerät T1 steuernden Kommunikationseinrichtung PBX1, sowie eine Identifikationsnummer des ersten Kommunikationsendgeräts T1. Die Identifikationsnummer des VOIP-Kommunikationsendgeräts T1 liegt beispielsweise in Form einer an einer - nicht dargestellten, auch "Gateway" genannten - Netzknoteneinrichtung eingerichteten Portnummer vor.

Mit Auswahl des Leistungsmerkmals "Mobile User" am ersten Kommunikationsendgerät T1 erhält die erste Kommunikationseinrichtung PBX1 durch eine über die Querleitung QL erfolgenden Abfrage von der zweiten Kommunikationseinrichtung PBX2 - Heimatstation - eine IP-Adresse (Internet Protocol), die Teilnehmernummer und die persönliche Identifikationsnummer des ersten Kommunikationsendgeräts T1.

Nach erfolgter Registrierung ist der mobile Teilnehmer an seinem Münchner Kommunikationsendgerät T1 mit seiner Heimatstation PBX2 in Wien über das paketorientierte Netzwerk LAN verbunden, siehe Verbindungsweg W2 der Zeichnung.

Tritt an seinem derzeitigen Standort in München ein Notfall auf, wählt der Teilnehmer am ersten Kommunikationsendgerät T1 die innerhalb des Kommunikationssystems CSY vorbehaltene Notrufnummer "110". Der Verbindungswunsch mit der zugehörigen zu wählenden Teilnehmernummer wird, zusammen mit Informationen I zum Standort des Kommunikationsendgerät T2 an die Heimatstation PBX2 des mobilen Teilnehmers übertragen. Die Informationen I zum Standort des ersten Kommunikationsendgeräts T1 liegen im Ausführungsbeispiel in Form einer vollständigen Notrufnummer gemäß den obigen Ausführungen vor.

Die Informationen I zum Standort des Kommunikationsendgeräts T1 werden entweder zum Zeitpunkt des Rufaufbaus zu dieser Notrufnummer an die Heimatstation PBX1 übertragen, oder erfolgt, gemäß einer alternativen Ausgestaltung der Erfindung, bereits nach der erfolgten Registrierung des mobilen Teilnehmers am ersten Kommunikationsendgerät T1.

Mit einem Vergleich der Informationen I zum Standort des ersten Kommunikationsendgeräts T1 mit eigenen Informationen zum Standort bestimmt die zweite Kommunikationseinrichtung PBX2, dass der Standort des mobilen Teilnehmers nicht in dem von der zweiten Kommunikationseinrichtung PBX2 verwalteten Segment - in diesem Fall die Stadt Wien - liegt. Der dem mobilen Teilnehmer geographisch nächstliegende Standort für die Weiterleitung an eine den Notruf durchstellende Kommunikationseinrichtung PBX1 wird in Folge dessen durch eine Abfrage in einer der zweiten Kommunikationseinrichtung PBX2 zugeordneten - nicht dargestellten - Datenbank ermittelt. Die zweite Kommunikationseinrichtung PBX2 leitet dann den von der ersten Kommunikationseinrichtung T1 ausgehenden Notruf über die erste Kommunikationseinrichtung PBX1 an die dieser - am Standort des Teilnehmers lokalisierte - Kommunikationseinrichtung PBX1 zugeordneten Rettungsleitstelle EMG1 weiter.

Diese Weiterleitung erfolgt entweder über das paketorientierte Netzwerk LAN oder über die Querleitung QL. Bezüglich der Bearbeitung der Weiterleitung wird beispielsweise die Methode eines sogenannten "Abwurfs" verwendet. Dieser Abwurf wird beispielsweise durch eine Funktion "Call Interception" ausgeführt, die in einem sogenannten QSIG-Protokoll zur Verfügung steht. Das QSIG-Protokoll ("Q-Interface Signalling Protocol") ist ein im Rahmen des ISDN-Protokolls (Integrated Services Digital Network) verwendetes Protokoll für die Übertragung und Bearbeitung von Signalisierungsinformationen. Unter dem Abwurf versteht man allgemein die Weiterleitung an ein vordefiniertes Ziel, wenn eine Rufdurchstellung nicht durchführbar ist.

Dieser - auch "Call Interception" bezeichnete - Abwurf wird im folgenden detaillierter beschrieben. Die Heimatstation PBX1 des mobilen Teilnehmers leitet den Notruf hierzu nicht zu der örtlichen Rettungsleitstelle EMG2 durch, sondern gibt diesen zur weiteren Vermittlung an die erste Vermittlungseinrichtung PBX1 weiter. Hierzu wird die in QSIG verwendete "Called Party Number", also die Teilnehmernummer des zu rufenden Ziels durch die Knoten- und/oder Teilnehmernummer der ersten Kommunikationseinrichtung PBX1 ersetzt. In einer "SETUP"-Nachricht wird eine "Invoke"-Operation, d.h. ein Aufrufbefehl, eingefügt, der als Abwurfgrund - in QSIG beispielsweise mit einem Informationselement "interceptionCause" benannt - den Wert "emergencyCall", d.h. Notruf, sowie in einem weiteren Informationselement "calledNumber" die zu rufende Notrufnummer enthält.

Der Inhalt des Informationselements "Calling Party Number" wird geändert von der lokalen IP-Identifikationsnummer auf die Teilnehmernummer des mobilen Teilnehmers, d.h. die seinem zweiten Kommunikationsendgerät T2 zugeordnete Teilnehmernummer.

Damit enthält die erste Kommunikationseinrichtung PBX1, durch die das erste Kommunikationsendgerät T1 eigentlich administriert wird, den Notruf und stellt diesen an die erste Rettungsleitstelle EMG1 durch.

In einer alternativen Ausführungsform werden alle in dem Kommunikationssystem CSY veranlassten Notrufe an einen - nicht dargestellten - zentralen Notrufleitrechner mittels des Abwurf-Verfahrens durchgestellt. Dieser zentrale Notrufleitrechner bestimmt dann mittels der übergebenen Knotenund/oder Rufnummer der dem rufenden Kommunikationsendgerät T1 zugeordneten Kommunikationseinrichtung PBX1 und der lokalen Identifikationsnummer des Kommunikationsendgeräts T1 in - nicht dargestellten - Zuordnungstabellen eine nächstliegenden Rettungsleitstelle. Für diese Ausführungsform ist unter anderem eine Verwendung von geographischen Koordinaten für die den Standort charakterisierenden Informationen I vorteilhaft.

Das erfindungsgemäße Verfahren ist in seiner Anwendung nicht auf Kommunikationsverbindungen zu Rettungsleitstellen, Notrufe, beschränkt. Es findet auch Anwendung für lokale Auskunftsdienste, in der Fachwelt auch "Location Based Services" genannt, zu denen z.B. Fahrplanauskunftsdienste, Telefonauskunftdienste usw. gehören.

Generell ist das erfindungsgemäße Verfahren also anwendbar auf alle Dienste - Kommunikationsdienste, datenbasierte und/oder rechnergestützte Informationsdienste - für die Informationen über den momentanen Aufenthaltsort eines Anrufers für den Dienstgeber wichtig oder nützlich sind.

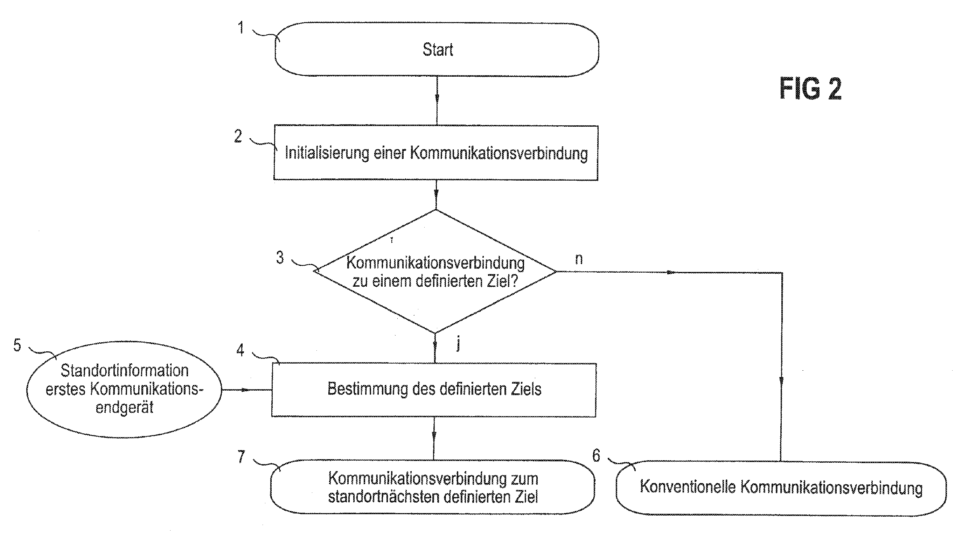

In Fig. 2 ist ein vereinfacht dargestelltes Ablaufdiagramm zur Veranschaulichung der erfindungsgemäßen Notrufbehandlung dargestellt. Das Verfahren beginnt mit einem ersten Schritt 1 ("Start"), bei dem beispielsweise ein Bediener den Hörer des Kommunikationsendgeräts T1 abhebt, oder an seiner telephoniefunktionenunterstützenden Rechnereinheit T1 eine Zuteilung von Ressourcen für eine aufzubauende Telekommunikationsverbindung veranlasst. Bei dem folgenden Verfahrensschritt 2, Initialisierung einer Kommunikationsverbindung, wählt der Teilnehmer am ersten Kommunikationsendgerät T1 eine Teilneh mernummer bzw. gibt diese an der telephoniefunktionenunterstützenden Rechnereinheit T1 ein. Daraufhin wird in einem folgenden Verfahrensschritt 3 eine Überprüfung vorgenommen, ob die einzurichtende Kommunikationsverbindung zu einem definierten Ziel erfolgen soll. Diese Auswertung erfolgt z.B. anhand der gewählten Teilnehmernummer des Bedieners. Ergibt diese Überprüfung, dass die Kommunikation nicht zu einem definierten Ziel erfolgen soll - dies entspricht dem "Nein"-Zweig, in der Zeichnung mit "n" bezeichnet - so handelt es sich um eine konventionelle Kommunikationsverbindung, die in Verfahrensschritt 6 entsprechend den bekannten Vermittlungsverfahren weiterbehandelt wird. Ergibt das Ergebnis der Überprüfung 3 jedoch, dass die Kommunikationsverbindung zu einem definierten Ziel erfolgen soll, beispielsweise für den Fall, dass eine vorbehaltene Teilnehmernummer erkannt wird, erfolgt die weitere Bearbeitung des Verfahrens mit der Wahl des "Ja"-Zweigs, in der Zeichnung mit "j" bezeichnet. In einem folgenden Verfahrensschritt 4 wird unter Verwendung von Standortinformationen - Verfahrenskriterium 5 der Zeichnung - des ersten Kommunikationsendgeräts T1 eine Bestimmung des definierten Ziels gemäß Verfahrensschritt 4 durchgeführt. Nach der Bestimmung des definierten Ziels wird in einem folgenden Verfahrensschritt 7 eine Kommunikationsverbindung zum standortnächsten definierten Ziel aufgebaut.

## Patentansprüche

1. Verfahren zur Leitweglenkung von Kommunikationsverbindungen in einem Kommunikationssystem (CSY) mit
- einem einer ersten Kommunikationseinrichtung (PBX1) zugeordneten Kommunikationsendgerät (T1), das an einer zweiten Kommunikationseinrichtung (PBX2) registrierbar ist,
- einem paketorientierten Netzwerk (LAN), über welches das Kommunikationsendgerät (T1) mit der ersten und der zweiten Kommunikationseinrichtung (PBX1,PBX2) verbunden ist, wobei nach einer durch einen Teilnehmer erfolgenden Registrierung das Kommunikationsendgerät (T1) von der ersten Kommunikationseinrichtung (PBX1) abgemeldet und der zweiten Kommunikationseinrichtung (PBX2) zugeordnet wird,
**dadurch gekennzeichnet,**
- **dass** bei einer am Kommunikationsendgerät (T1) initialisierten Kommunikationsverbindung eine Überprüfung vorgenommen wird, ob die eingeleitete Kommunikationsverbindung zu einem durch eine im Kommunikationssystem (CSY) vorbehaltene Teilnehmernummer definierten Zieleinrichtung erfolgen soll,
- **dass** bei einem positiven Überprüfungsergebnis eine Bestimmung der Zieleinrichtung (EMG1) unter Berücksichtigung von im Kommunikationsendgerät (T1) verfügbaren, den Standort des Kommunikationsendgeräts (T1) charakterisierenden Informationen (I) erfolgt,
- **dass** die Kommunikationsverbindung zu einer der ersten Kommunikationseinrichtung (PBX1) zugeordneten Zieleinrichtung (EMG1) aufgebaut wird.

2. Verfahren nach Anspruch 1,
**dadurch gekennzeichnet,**
**dass** die Kommunikationsverbindung zu einem Kommunikationsendgerät einer Notrufstelle und/oder Rettungsleitstelle führt.

3. Verfahren nach Anspruch 1,
**dadurch gekennzeichnet,**
**dass** die Kommunikationsverbindung zu einem Kommunikationsendgerät einer lokalen Auskunftsstelle führt.

4. Verfahren nach einem der vorhergehenden Ansprüche,
**dadurch gekennzeichnet,**
**dass** die Information (I) in Form einer kommunikationssystemweit eindeutigen Teilnehmernummer vorliegt.

5. Verfahren nach einem der Ansprüche 1 bis 3,
**dadurch gekennzeichnet,**
**dass** die Information (I) in Form von geographischen Koordinaten vorliegt.

6. Verfahren nach einem der Ansprüche 1 bis 3,
**dadurch gekennzeichnet,**
**dass** die Information (I) in Form einer lokalen Identifizierungsnummer vorliegt.

7. Verfahren nach einem der Ansprüche 1 bis 3,
**dadurch gekennzeichnet,**
**dass** die Information (I) in Form einer im paketorientierten Netzwerk (LAN) eindeutigen Identifikationsnummer vorliegen.

8. Verfahren nach einem der vorhergehenden Ansprüche,
**dadurch gekennzeichnet,**
**dass** die Information (I) von der ersten Kommunikationseinrichtung (PBX1) an das Kommunikationsendgerät (T1) zum Zeitpunkt der Inbetriebnahme und/oder Wartung des Kommunikationsendgeräts (T1) an das Kommunikationsendgerät (T1) übertragen werden.

9. Verfahren nach einem der Ansprüche 1 bis 7,
**dadurch gekennzeichnet,**
**dass** die Information (I) durch das Kommunikationsendgerät (T1) eigenständig bestimmt werden.

10. Verfahren nach einem der vorhergehenden Ansprüche,
**dadurch gekennzeichnet,**
**dass** die Überprüfung vom Kommunikationsendgerät (T1) vorgenommen wird.

11. Verfahren nach einem der Ansprüche 1 bis 9,
**dadurch gekennzeichnet,**
**dass** die Überprüfung von der zweiten Kommunikationseinrichtung (PBX2) vorgenommen wird.
